(19) Europäisches Patentamt
European Patent Office
Office européen des brevets

(11) EP 3 583 166 B1

(12) **FASCICULE DE BREVET EUROPEEN**

(45) Date de publication et mention de la délivrance du brevet:
**06.01.2021 Bulletin 2021/01**

(21) Numéro de dépôt: **18708450.4**

(22) Date de dépôt: **16.02.2018**

(51) Int Cl.:
***C09B 67/02*** (2006.01) ***C09B 11/04*** (2006.01)
***C09K 9/02*** (2006.01) ***C09D 11/50*** (2014.01)

(86) Numéro de dépôt international:
**PCT/FR2018/050374**

(87) Numéro de publication internationale:
**WO 2018/150146 (23.08.2018 Gazette 2018/34)**

(54) **NOUVELLE COMPOSITION DE PIGMENT THERMOCHROME COMPRENANT UN COMPOSÉ DE FORMULE (I) EN TANT QUE MILIEU RÉACTIONNEL.**

NEUARTIGE THERMOCHROME PIGMENTZUSAMMENSETZUNG MIT EINER VERBINDUNG DER FORMEL (I) ALS REAKTIONSMEDIUM

NOVEL THERMOCHROMIC PIGMENT COMPOSITION COMPRISING A COMPOUND OF FORMULA (I) AS REACTION MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.02.2017 FR 1751293**

(43) Date de publication de la demande:
**25.12.2019 Bulletin 2019/52**

(73) Titulaire: **Société BIC**
**92110 Clichy (FR)**

(72) Inventeurs:
- **DEBRAUWER, Christelle**
  **77860 Saint Germain Sur Morin (FR)**
- **DAMIANO, Anne-Lise**
  **77400 Lagny Sur Marne (FR)**
- **BOURQUE, Alexander**
  **77144 Montevrain (FR)**

(74) Mandataire: **Cabinet Beau de Loménie**
**158, rue de l'Université**
**75340 Paris Cedex 07 (FR)**

(56) Documents cités:
**EP-A1- 2 626 398**
**EP-A1- 3 009 493**
**EP-A1- 3 103 853**
**WO-A1-2013/115800**
**WO-A1-2016/198784**
**US-A- 4 094 855**
**US-A1- 2015 090 159**

- **PASTOR S D ET AL: "Medium-sized Heterocycles: synthesis of a 2,10-bis(alkoxycarbonl)-substituted 6-oxo-12H-dibenzo(d,g)(1,3,2)dioxaphosphocin", JOURNAL OF HETEROCYCLIC CHEMI, WILEY-BLACKWELL PUBLISHING, INC, US, vol. 28, 1 janvier 1991 (1991-01-01), pages 1561-1564, XP009086695, ISSN: 0022-152X, DOI: 10.1002/JHET.5570280617**
- **STEPHEN D. PASTOR ET AL: "Nucleophilic subsitution at silicon: Synthesis of sterically-hindered bis(2,6-di-t-butylaryloxy)silanes", JOURNAL OF ORGANOMETALLIC CHEMISTRY., vol. 328, no. 3, 1 juillet 1987 (1987-07-01), pages 263-274, XP055422123, CH ISSN: 0022-328X, DOI: 10.1016/0022-328X(87)80244-9**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne une nouvelle composition de pigment thermochrome comprenant comme milieu réactionnel un composé de formule (I). La présente invention vise également des pigments thermochromes microencapsulés comprenant une composition de pigment thermochrome selon l'invention, des compositions d'encre comprenant de tels pigments thermochromes microencapsulés, et enfin des instruments d'écriture comprenant de telles compositions d'encre.

## ETAT DE L'ART ANTÉRIEUR ET BUT DE L'INVENTION

Les compositions de pigments thermochromes présentent des propriétés de décoloration réversible liées à un changement de température. Ces compositions trouvent application lorsqu'un marquage à l'encre exige des effaçages répétés.

L'effet thermochrome d'une encre fonctionne grâce à l'association des trois composés suivants :

(A) au moins un composé organique colorant donneur d'électrons ou leuco-colorant,
(B) au moins un composé accepteur d'électrons ou développeur de couleur, et
(C) au moins un composé servant de milieu réactionnel capable de conduire à une réaction d'acceptation/don d'électrons réversible attribuable aux composés (A) et (B) ou agent régulateur de changement de température.

Les changements de température provoquent réversiblement la coloration ou la décoloration des encres. Ainsi, l'augmentation de chaleur va provoquer l'effacement de l'encre, tandis qu'un refroidissement provoquera son apparition. Ces changements suivent le schéma de la **Figure 1.** Sur ce schéma, la température de début de disparition de la couleur de l'encre est T3, celle à laquelle la couleur de l'encre a totalement disparue est T4 et $T_G$ est la température médium entre T3 et T4. A l'inverse, la température de début de réapparition de la couleur de l'encre est T2, celle à laquelle la couleur de l'encre a totalement réapparu est T1 et $T_H$ est la température se trouvant au milieu entre T1 et T2. On appelle largeur d'hystérésis de changement de couleur ($\Delta H$), la plage entre ($T_H$) et ($T_G$).

De nombreuses compositions de pigments thermochromes ont été décrites dans l'art antérieur. A titres d'exemples, sont citées :

- la demande EP 3 009 493 A1, qui décrit une composition de pigments thermochromes comprenant en tant que milieu réactionnel (C) un composé estérifié de formule :

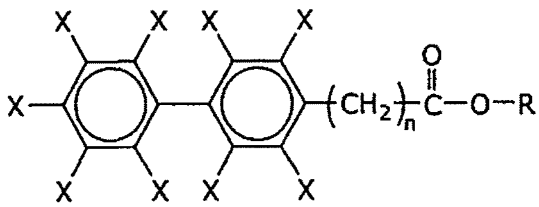

.

- la demande WO 2016/198784 A1, qui décrit une composition de pigments thermochromes comprenant un mélange des deux composés suivants :

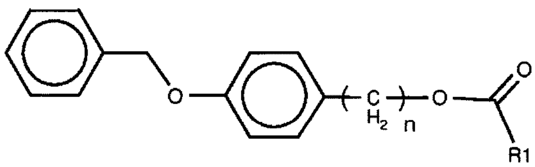

dans laquelle R1 représente un groupe alkyle ou alcényle en $C_5$-$C_{23}$, et n représente un entier allant de 1 à 6, et

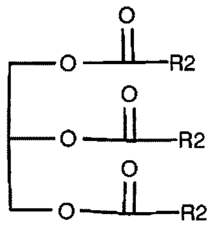

dans laquelle $R_2$ représente un groupe alkyle ou alcényle en $C_5$-$C_{23}$ ;

- la demande WO 2013/115800 A1, qui décrit une composition de pigment thermochrome comprenant des co-solvants spécifiques permettant de diminuer la largeur d'hystérésis.

De manière surprenante, les Inventeurs ont découverts une nouvelle composition de pigment thermochrome comprenant en tant que composé (C) au moins un composé de formule (I) présentant des plages de températures de fusion et de cristallisation optimales correspondant respectivement aux températures de décoloration et de recoloration de ces composés. Le composé de formule (I) de l'invention présente de nombreux avantages à être utilisé comme agent régulateur de changement de température dans des compositions de pigments thermochromes : il présente des caractéristiques d'hystérésis remarquables et un contraste de couleurs extrêmement élevé entre l'état coloré et l'état décoloré. La composition de pigment thermochrome de l'invention présente en outre des propriétés anti-oxydantes et/ou de résistance aux rayonnements UV, ces propriétés étant intrinsèques au composé de formule (I), sans qu'il soit nécessaire d'ajouter des composés antioxydants et/ou anti-UV dans la composition.

**DESCRIPTION DE L'INVENTION**

Selon un premier aspect, la présente invention a pour objet une composition de pigment thermochrome comprenant :

(A) au moins un composé organique colorant donneur d'électrons,
(B) au moins un composé accepteur d'électrons, et
(C) au moins un composé répondant à la formule (I) suivante :

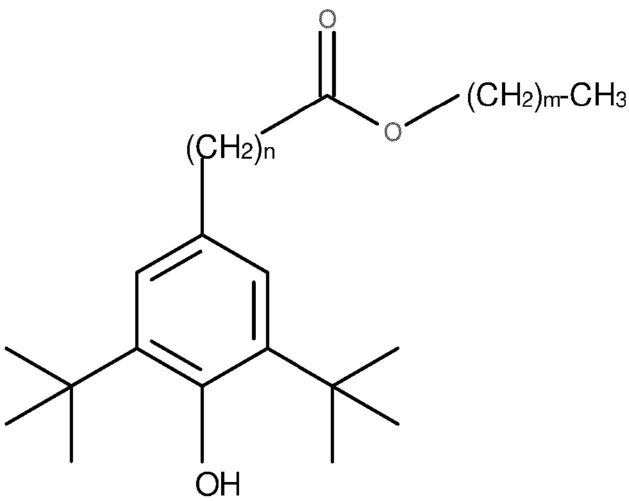

(I)

dans laquelle :

- n = 0-2, et
- m = 5-19, de préférence m = 7-19, et encore plus préférentiellement m = 11-17.

Des composés de formule (I) sont connus de l'art antérieur pour leur utilisation comme antioxydants ou stabilisants UV, mais n'ont jamais été décrits pour leur utilisation comme composé (C), c'est-à-dire comme milieu réactionnel

capable de conduire à une réaction d'acceptation/don d'électrons réversible entre un composé organique colorant donneur d'électrons (A) et un composé accepteur d'électrons (B), dans des compositions de pigments thermochromes. C'est de façon tout à fait surprenante que les Inventeurs ont découverts que le composé de formule (I) de l'invention définie ci-dessus présente des températures de fusion et de cristallisation optimales permettant son utilisation comme composé (C) ou agent régulateur de changement de température dans des compositions de pigments thermochromes.

Ainsi, l'invention vise également l'utilisation d'un composé répondant à la formule (I) suivante :

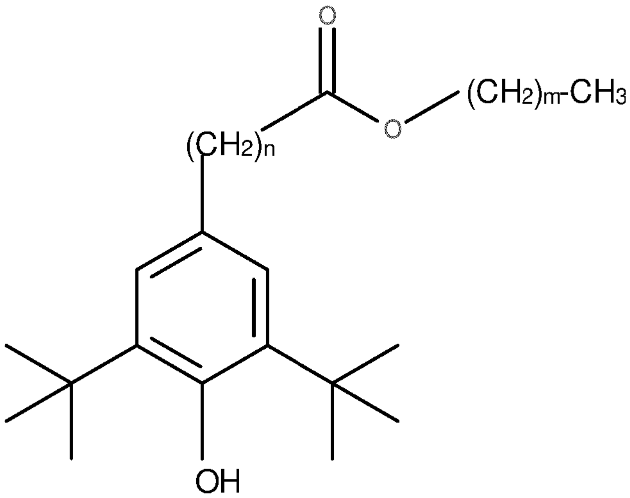

(I)

et dans laquelle :

- n = 0-2, et
- m = 5-19, de préférence m = 7-19, et encore plus préférentiellement m = 11-17 comme milieu réactionnel capable de conduire à une réaction d'acceptation/don d'électrons réversible entre un composé organique colorant donneur d'électrons (A) et un composé accepteur d'électrons (B), d'une composition de pigment thermochrome

Avantageusement, le composé de formule (I) présent dans la composition de pigment thermochrome de l'invention est choisi parmi un des composés suivants :

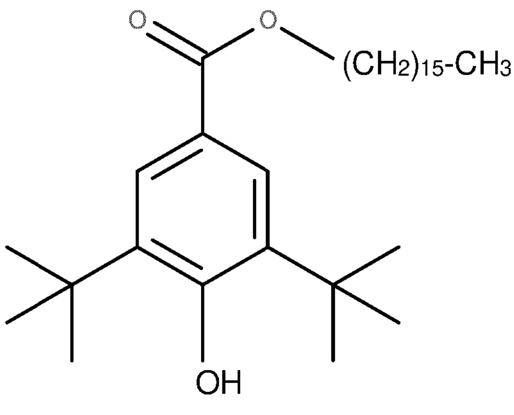

(1)

ou

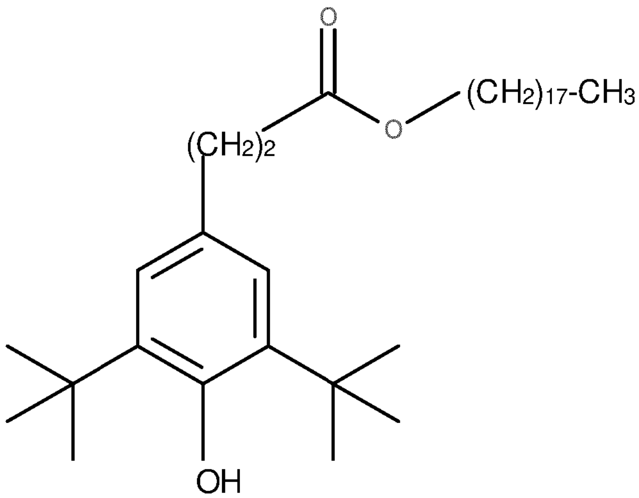

(2)

Les taux en poids des composés (A), (B) et (C) sont influencés par la nature et la concentration de chacun de ces composés.

Le taux en poids de composé organique colorant donneur d'électrons (A) peut varier de 1 à 10%, de préférence de 1 à 6%, et encore plus préférentiellement de 2 à 4%, en poids par rapport au poids total de la composition de pigment thermochrome.

Le taux en poids de composé accepteur d'électrons (B) peut varier de 1 à 20%, de préférence de 1 à 14%, et encore plus préférentiellement de 4 à 10%, en poids par rapport au poids total de la composition de pigment thermochrome.

Le taux en poids de composé (C) de formule (I) jouant le rôle de milieu réactionnel peut varier de 70 à 98%, de préférence de 80 à 98%, et encore plus préférentiellement de 86 à 94%, en poids par rapport au poids total de la composition de pigment thermochrome.

Ainsi, la composition de pigment thermochrome de l'invention peut comprendre :

(A) de 1 à 10%, de préférence de 1 à 6%, et encore plus préférentiellement de 2 à 4%, en poids d'au moins un composé organique colorant donneur d'électrons,

(B) de 1 à 20%, de préférence de 1 à 14%, et encore plus préférentiellement de 4 à 10%, en poids d'au moins un composé accepteur d'électrons, et

(C) de 70 à 98%, de préférence de 80 à 98%, et encore plus préférentiellement de 86 à 94%, en poids d'au moins un composé répondant à la formule (I).

Selon un mode de réalisation préféré, la composition de pigment thermochrome de l'invention comprend :

(A) de 2 à 4% en poids d'au moins un composé organique colorant donneur d'électrons,

(B) de 4 à 10% en poids d'au moins un composé accepteur d'électrons, et

(C) de 86 à 94% en poids d'au moins un composé répondant à la formule (I).

Avantageusement, la composition de pigment thermochrome de l'invention présente une largeur d'hystérésis de changement de couleur ($\Delta H$) après encapsulation allant de 20 à 80°C, de préférence de 30 à 80°C, et encore plus préférentiellement de 40 à 70°C.

En tant que composé organique colorant donneur d'électrons (A), des composés classiquement connus tels que les phtalides de diphénylméthane, les phtalides phénylindolyl, les indolylphthalides, les azaphthalides de diphénylméthane, les azaphthalides de phénylindolyl, les fluoranes, les styrylquinolines et les lactones diazarhodamine peuvent être cités à titre non limitatif, des exemples de ces composés étant présentés ci-après.

Le composé organique colorant donneur d'électrons (A) peut ainsi être choisi parmi le 3-(4-diéthylamino-2-éthoxyphényl)-3-(1-éthyl-2-méthylindol-3-yl)-4-azaphthalide (Blue 63, n° CAS : 69898-40-4), le 3,3-bis(p-diméthylaminophényl)-6-diméthylaminophthalate (n° CAS : 1552-42-7), le 2'-chloro-6'-(diéthylamino)-3'-méthylfluorane (n° CAS : 21121-62-0), le 6'-(diéthylamino)-1',3'-diméthylfluorane (n° CAS : 21934-68-9), le 6'-(diéthylamino)-1',3'-diméthylfluorane (n° CAS : 21934-68-9), le 2-chloro-6-(diéthylamino)-fluorane (n° CAS : 26567-23-7), le 3-diéthylaminobenzofluorane (n° CAS : 26628-47-7), le 3',6'-bis(diéthylamino)-2-(4-nitrophényl)spiro[isoindole-1,9'-xanthène]-3-one (n° CAS : 29199-09-5), le 2-phénylamino-3-méthyl-6-diéthylaminofluorane (n° CAS : 29512-49-0), le 2'-(dibenzylamino)-6'-(diéthylamino)fluorane (n° CAS : 34372-72-0), le 2-(2,4-diméthylphénylamino)-3-méthyl-6-diéthylaminofluorane (Black 15, n° CAS : 36431-22-8), le 3-(1,2-diméthyl-3-indolyl)-3-[4-(diéthylamino)-2-méthylphényl]phthalide (n° CAS : 36499-49-7), le 3',6'-diméthoxyfluorane (n° CAS : 36886-76-7), le 3,3-bis-(1-butyl-2-méthyl-indol-3-yl)-3H-isobenzofuran-1-one (Red 40, n° CAS : 50292-91-6), le 3,3-bis-(2-méthyl-1-octyl-1H-indol-3-yl)-3H-isobenzofuran-1-one (n° CAS : 50292-95-0), le 2'-anilino-6'-[éthyl(p-tolyl)amino]-3'-méthylspiro[isobenzofuran-1(3H),9'-[9H]xanthène]-3-one (n° CAS : 59129-79-2), le 3-(4-diéthylamino-2-éthoxyphényl)-3-(1-éthyl-2-méthylindol-3-yl)-4-azaphthalide (n° CAS : 69898-40-0), le 3-(N-éthyl-n-isopentylamino)-6-méthyl-7-anilino fluorène (n° CAS : 70516-41-5), le 3-[4-(diéthylamino)phényl]-3-(1-éthyl-2-méthyl-1H-indol-3-yl)phthalide (n° CAS : 75805-17-3), le 2'-(2-chloroanilino)-6'-(dibutylamino)fluorane (n° CAS : 82137-81-3), le 2-phénylamino-3-méthyl-6-dibutylaminofluorane (n° CAS : 89331-94-2), le 3-(1-butyl-2-méthyl-1H-indol-3-yl)-6-(diméthylamino)-3-[4-(diméthylamino)phényl]-3-(1(3H)-isobenzofuranone (n° CAS : 92453-31-1), le 7-(4-diéthylamino-2-hexyloxyphényl)-7-(1-éthyl-2-méthyl-1H-indol-3-yl)-7H-furo[3,4-b]pyridin-5-one (Blue 203, n° CAS : 98660-18-5), le 7,7-bis[4-(diéthylamino)-2-éthoxyphényl]furo[3,4-b]pyridin-5-one (n° CAS : 132467-74-4), le N,N-diméthyl-4-[2-[2-(octyloxy)phényl]-6-phényl-4-pyridinyl]benzènamine (Yellow CK37, n° CAS : 144190-25-0), le 3-(2,2-bis(1-éthyl-2-méthylindol-3-yl)vinyl)-3-(4-diéthylaminophényl)-phthalide (n° CAS : 148716-90-9).

De manière préférée, le composé organique colorant donneur d'électrons (A) est choisi parmi le 3-(4-diéthylamino-2-éthoxyphényl)-3-(1-éthyl-2-méthylindol-3-yl)-4-azaphthalide (Blue 63, n° CAS : 69898-40-4), le 2'-(dibenzylamino)-6'-(diéthylamino)fluorane (n° CAS : 34372-72-0), le N,N-diméthyl-4-[2-[2-(octyloxy)phényl]-6-phényl-4-pyridinyl]benzènamine (Yellow CK37, n° CAS : 144190-25-0), le 7-(4-diéthylamino-2-hexyloxyphényl)-7-(1-éthyl-2-méthyl-1H-indol-3-yl)-7H-furo[3,4-b]pyridin-5-one (Blue 203, N° CAS : 98660-18-5), le 2-(2,4-diméthylphénylamino)-3-méthyl-6-diéthylaminofluoran (Black 15, N° CAS : 36431-22-8), et le 3,3-bis-(1-butyl-2-méthyl-indol-3-yl)-3H-isobenzofuran-1-one (Red 40, n° CAS : 50292-91-6).

En tant que composé accepteur d'électrons (B), on peut citer à titre non limitatif les composés ayant un proton actif tels que les composés ayant un groupe hydroxyle phénolique (monophénols ou polyphénols), leurs dérivés qui ont des substituants tels qu'un groupe alkyle, un groupe aryle, un groupe acyle, un groupe alcoxycarbonyle, un groupe carboxy, des esters de ceux-ci, un groupe amido ou un atome d'halogène, et les résines condensées phénol-aldéhyde tels que des bisphénols ou des trisphénols.

Au sens de la présente invention, on entend par :

- Alkyle : un groupe aliphatique hydrocarboné saturé, linéaire ou ramifié, en $C_1$-$C_{20}$, de préférence en $C_1$-$C_{12}$, plus préférentiellement en $C_1$-$C_6$, et encore plus préférentiellement en $C_1$-$C_4$. Le terme « ramifié » signifie qu'au moins un groupe alkyle inférieur tel qu'un méthyle ou un éthyle est porté par une chaîne alkyle linéaire. A titre de groupe alkyle, on peut mentionner par exemple les groupes méthyle, éthyle, n-propyle, i-propyle, n-butyle, t-butyle et n-pentyle.
- Aryle : tout groupe fonctionnel ou substituant dérivé d'au moins un cycle aromatique ; un cycle aromatique correspond à tout groupe mono- ou polycyclique plan comportant un système $\pi$ délocalisé dans lequel chaque atome du cycle comporte une orbitale p, lesdites orbitales p se recouvrant les unes les autres ; parmi de tels groupes aryle, on peut mentionner les groupes phényle, biphényle, naphthalène et anthracène. Les groupes aryles de l'invention comprennent de préférence de 4 à 12 atomes de carbone, et de manière encore plus préférée de 5 à 6 atomes de carbone. De manière encore plus préférée, le groupe aryle de l'invention est un groupe phényle.

Ainsi, le composé accepteur d'électrons (B) peut être choisi parmi le 2,2-bis(4-hydroxy-3-méthylphényl)propane (Bisphénol C, n° CAS : 79-97-0), le 4-hexyl-1,3-dihydroxybenzène (4-hexylrésorcinol, n° CAS : 136-77-6), le 4,4'-cyclohexylidènebisphénol (BPZ, n° CAS : 843-55-0), le 4,4'-(hexafluoroisopropylidène)diphénol (Bisphénol AF, n° CAS : 1478-61-1), le 4,4'-(1-phényléthylidène)bisphénol (n° CAS : 1571-75-1), le 2,2'-dihydroxybiphényl (n° CAS : 1806-29-7), le 4,4'-éthylidènebisphénol (n° CAS : 2081-08-5), le 4,4'-(1,4-phénylènediisopropylidène)bisphénol (n° CAS : 2167-51-3), le 1,1-bis(4-hydroxy-3-méthylphényl)cyclohexane (n° CAS : 2362-14-3), le 9,9-bis(4-hydroxyphényl)fluorène (n° CAS : 3236-71-3), le 4,4'-(1,3-phénylènediisopropylidène)bisphénol (n° CAS : 13595-25-0), le 1,1,1-tris(4-hydroxyphényl)éthane (n° CAS : 27955-94-8), le 4,4'-(2-éthylhexylidène)diphénol (n° CAS : 74462-02-5), le $\alpha,\alpha,\alpha'$-tris(4-hydroxyphényl)-1-éthyl-4-isopropylbenzène (n° CAS : 110726-28-8), le 4-(1,1,3,3-tétraméthylbutyl)phénol (n° CAS : 140-66-9), le 4-hydroxydiphényléther (n° CAS : 831-82-3), le bis(2-hydroxy-1-naphthyl)méthane (n° CAS : 1096-84-0), le 4-(méthylsulfonyl)phénol (n° CAS : 14763-60-1), le 4-hydroxyphényl-4'-isopropoxyphényl sulfone (n° CAS : 95235-30-6), le 4,4'-dihydroxybiphényl (n° CAS : 92-88-6), le 4-hydroxybiphényl (n° CAS : 92-69-3), le p-hydroxycumène (n° CAS : 99-89-8), le 2,4-dihydroxybenzophénone (n° CAS : 131-56-6), l'hydroquinone monométhyléther (MEHQ, n° CAS : 150-76-5), le 3-n-pentadécylphénol (n° CAS : 501-24-6), le 4-(2-phénylisopropyl)phénol (n° CAS : 599-64-4), le 5-chloro-2-(2,4-dichlorophénoxy)phénol (n° CAS : 3380-34-5), le N-(p-toluènesulfonyl)-N'-(3-(p-toluènesulfonyloxy)phényl)urée (n° CAS : 232938-43-1), le 2,2-bis(3,5-dibromo-4-hydroxyphényl)propane (n° CAS : 79-94-7), le 4,4'-isopropylidènediphénol (n° CAS : 80-05-7), et le 4,4'-sulfonyldiphénol, (BPS, n° CAS : 80-09-1).

De manière préférée, le composé accepteur d'électrons (B) est choisi parmi le 2,2-bis(4-hydroxy-3-méthylphényl)propane (Bisphénol C, n° CAS : 79-97-0), le 4-hexyl-1,3-dihydroxybenzène (4-hexylrésorcinol, n° CAS : 136-77-6), le 4,4'-cyclohexylidènebisphénol (BPZ, n° CAS : 843-55-0), le 4,4'-(hexafluoroisopropylidène)diphénol (Bisphénol AF, n° CAS : 1478-61-1), le 4,4'-(1-phényléthylidène)bisphénol (n° CAS : 1571-75-1), le 2,2'-dihydroxybiphényl (n° CAS : 1806-29-7), le 4,4'-(1,4-phénylènediisopropylidène)bisphénol (n° CAS : 2167-51-3), le 1,1-bis(4-hydroxy-3-méthylphényl)cyclohexane (n° CAS : 2362-14-3), le 9,9-bis(4-hydroxyphényl)fluorène (n° CAS : 3236-71-3), le 4,4'-(1,3-phénylènediisopropylidène)bisphénol (n° CAS : 13595-25-0), le 1,1,1-tris(4-hydroxyphényl)éthane (n° CAS : 27955-94-8), le 4,4'-(2-éthylhexylidène)diphénol (n° CAS : 74462-02-5), et le $\alpha,\alpha,\alpha'$-tris(4-hydroxyphényl)-1-éthyl-4-isopropylbenzène (n° CAS : 110726-28-8).

La composition de pigment thermochrome de l'invention est préparée par dissolution des composés (A) et (B) dans le composé (C) de formule (I) telle que définie ci-dessus, puis agitation jusqu'à obtention d'un mélange homogène à l'aide d'un agitateur tel qu'un homo mélangeur ou un disperseur.

Les composés (A) et (B) ainsi associés avec le composé (C) de formule (I) telle que définie ci-dessus peuvent être formulés sous la forme de microcapsules. Ainsi, la composition de pigment thermochrome de l'invention est encapsulée dans des microcapsules pour former des pigments thermochromes microencapsulés. De tels pigments thermochromes microencapsulés constituent un autre objet selon l'invention. Ils présentent des caractéristiques avantageuses dans la mesure où ils sont résistants aux contraintes mécaniques, insolubles et donc dispersables dans l'eau, et d'agglomération lente.

La température de fusion (ou température de décoloration T4) des pigments thermochromes microencapsulés de l'invention peut varier de 20 à 80°C, de préférence de 30 à 80°C, et encore plus préférentiellement de 40 à 70°C.

La température de cristallisation (ou température de recoloration T1) des pigments thermochromes microencapsulés de l'invention peut varier de -40 à 20°C, de préférence de -30 à 10°C, et encore plus préférentiellement de -20 à 0°C.

Les microcapsules comprenant la composition de pigment thermochrome de l'invention présente un diamètre moyen pouvant aller de 0,5 à 30 $\mu$m, de préférence de 1 à 10 $\mu$m, et encore plus préférentiellement de 3-5 $\mu$m. Ce diamètre moyen correspond au d90 en volume et signifie que 90% en volume des microcapsules sont plus petites que la valeur de d90 indiquée. Ce diamètre moyen peut être déterminé par granulométrie laser en utilisant un système Zetasizer Nano ZS de Malvern.

Les procédés de micro-encapsulation utilisés incluent à titre non limitatif des méthodes conventionnelles, telles que :

- des procédés chimiques qui reposent sur la formation *in situ* des microcapsules enrobantes, comme par exemple par polymérisation ou polycondensation interfaciale, ces procédés étant les préférés,
- des procédés physico-chimiques, comme par exemple par séparation de phases ou coacervation, par évaporation-extraction de solvant, par gélification thermique d'émulsions (hot melt), ou
- des procédés mécaniques, comme par exemple par nébulisation/séchage (spray drying), par gélification ou congélation de gouttes, par enrobage en lit fluidisé (spray-coati ng).

Les microcapsules comprenant la composition de pigment thermochrome de l'invention sont avantageusement à base de résine aminoplaste, et de préférence à base de résine mélamine, de résine urée ou de résine benzoguanamine.

Les microcapsules comprenant la composition de pigment thermochrome de l'invention sont de préférence préparées par polymérisation *in situ* à partir de résine mélamine.

Un autre objet de l'invention vise une composition d'encre comprenant des pigments thermochromes microencapsulés selon l'invention.

Les pigments thermochromes microencapsulés de l'invention présents au sein de la composition d'encre représentent de 5 à 50% en poids du poids total de la composition d'encre.

La composition d'encre de l'invention est par ailleurs majoritairement constituée d'eau. Avantageusement, l'eau représente 40 à 80% en poids du poids total de la composition d'encre. Elle peut en outre comprendre un ou plusieurs co-solvants miscibles dans l'eau. Ainsi, la composition d'encre de l'invention peut contenir un solvant organique ou aqueux, de préférence un solvant aqueux. La composition d'encre de l'invention peut également contenir un ou plusieurs adjuvants spécifiques qui peuvent jouer différents rôles selon l'application finale visée. Ces applications peuvent concerner l'impression d'encre par sérigraphie, l'impression offset, l'impression par héliogravure, le revêtement par pulvérisation, le revêtement électrostatique, le revêtement par dépôt électrolytique, le revêtement au rouleau, l'impression au jet d'encre, les encres pour outils d'écriture tels que les stylos à bille, les stylos pinceaux, les marqueurs, les crayons de couleurs. La composition d'encre de l'invention peut également être ajoutée à une composition de résine thermoplastique ou thermodurcissable pour former des pièces moulées.

Parmi les solvants qui peuvent être ajoutés à la composition d'encre de l'invention, on peut citer l'eau et les solvants polaires miscibles dans l'eau comme par exemple :

- les alcools : les alcools linéaires ou ramifiés en $C_1$-$C_{15}$ tels que l'isopropanol, le butanol, l'isobutanol, le pentanol, l'alcool benzylique ; la glycérine ; le diglycérine ; la polyglycérine
- les esters tels que l'acétate d'éthyle ou l'acétate de propyle,
- les esters de carbonate tels que le carbonate de propylène ou le carbonate d'éthylène,
- les cétones telles que la méthylisobutylcétone (MIBC), l'acétone ou la cyclohexanone,
- les glycols tels que l'éthylène glycol, le diéthylène glycol, le triéthylène glycol, le propylène glycol, le polyéthylène glycol, l'éthylène glycol monométhyl éther, le 3-butylène glycol et le thiodiéthylène glycol,
- les amides tels que le diméthylacétamide ou le diméthylformamide, et
- leur mélange.

Le ou les solvants représentent de 5 à 20% en poids du poids total de la composition d'encre.
Parmi les adjuvants mentionnés ci-dessus, on peut citer :

- des modificateurs de rhéologie (agent rhéofluidifiant) capables de générer un effet gélifiant, tels que la gomme de xanthane ou la gomme arabique,
- des antimousses, tels que les dispersions aqueuses de polysiloxane modifiés (MOUSSEX® de Synthron),
- des régulateurs de pH, tels que l'hydroxyde de sodium, la triéthanolamine,
- des tensioactifs, tels que les polyéther polyols (TERGITOL™ de DOW),
- des biocides, tels que les isothiazolinones (ACTICIDE® de Thor),
- des anticorrosifs, tel que la benzotriazole,
- des lubrifiants,
- des dispersants,
- des agents de coalescence,
- des agents réticulants,
- des agents mouillants,
- des plastifiants,
- des antioxydants,
- des stabilisateurs UV.

Un objet supplémentaire de l'invention concerne des instruments d'écriture comprenant une composition d'encre selon l'invention. Ces instruments sont généralement constitués d'un corps comprenant la composition d'encre de l'invention, et éventuellement un élément de frottement. L'instrument d'écriture selon l'invention est avantageusement choisi parmi les stylos à bille, les crayons, les craies, et encore plus avantageusement les stylos à bille à encre effaçable par friction. L'élément de frottement de l'instrument d'écriture est de préférence une gomme.
Les supports sur lesquels peut être appliquée la composition d'encre de l'invention sont le papier, les fibres, le cuir, le plastique, le verre, le métal, le bois, le béton.
Outre les dispositions qui précèdent, l'invention comprend encore d'autres dispositions qui ressortiront du complément de description qui suit, qui se rapporte à l'utilisation de composés de formule (I) selon l'invention comme agent régulateur de changement de température dans des compositions de pigments thermochromes selon l'invention, et à leur caractérisation.

**EXEMPLES**

**EXEMPLE 1 :**

Préparation d'une composition de pigment thermochrome :

Une composition de pigment thermochrome est préparée en mélangeant 2,2 parts en poids de 3-(4-diéthylamino-2-éthoxyphényl)-3-(1-éthyl-2-méthylindol-3-yl)-4-azaphthalide (composé (A), n°CAS : 69898-40-4), 2,2 parts en poids de 4,4'-(hexafluoroisopropylidène)diphénol (composé (B1) n°CAS : 1478-61-1), 2,2 parts en poids de 2,2-bis(4-hydroxy-3-méthylphenyl)propane (composé (B2), n°CAS : 79-97-0), et 93,3 parts en poids d'un composé de formule (I) selon l'invention (composé (1)) (composé (C)) :

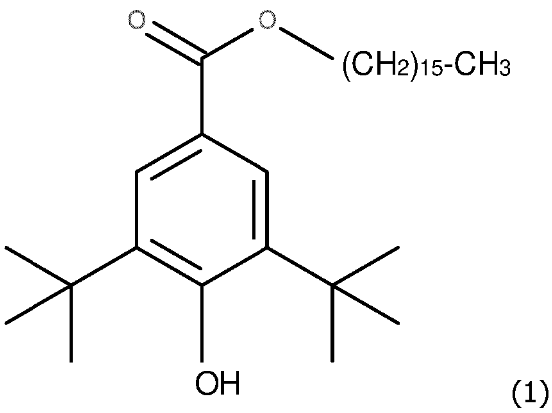

(1)

Le mélange obtenu est chauffé, sous agitation, à une température de 110°C pendant 1 heure, jusqu'à solubilisation complète des composés (A), (B1) et (B2) dans le composé (C).

Préparation d'un pigment thermochrome microencapsulé :

7,2 parts en poids d'une solution aqueuse d'un copolymère d'anhydride maléique et de méthylvinyléther (solution à 33% en poids de copolymère) sont neutralisés avec 8,8 parts en poids d'une solution aqueuse d'hydroxyde de sodium (solution à 1,0 M). Cette solution est diluée avec 38,4 parts en poids d'eau, et le mélange émulsionné avec un homogénéiseur à une vitesse d'au moins 15 $m.s^{-1}$. 27,8 parts en poids de la composition de pigment thermochrome précédemment préparée sont ajoutés, et l'émulsion obtenue est maintenue à une température de 80°C pendant 30 minutes. 17,8 parts en poids d'un pré-polymère mélamine-formaldéhyde (solution aqueuse à 50% en poids de pré-polymère) sont ensuite ajoutés au mélange au goutte-à-goutte. Le milieu réactionnel est alors chauffé à une température de 90°C et mélangé à une vitesse d'au moins 15 $m.s^{-1}$ pendant 4 heures.

Un slurry constitué de microcapsules de pigment thermochrome dispersées dans un solvant aqueux est obtenu, les microcapsules présentant un diamètre d90 de 3,6 μm, déterminé à l'aide d'un système Zetasizer Nano ZS de Malvern avec une illumination à 632 nm.

Les microcapsules de pigment thermochrome obtenues ont la propriété de changer de couleur du bleu à l'incolore au-dessus de 62°C avec un effet d'hystérésis de la couleur.

Préparation d'une composition d'encre :

10,5 parts en poids de glycérine (co-solvant) sont chauffés à une température de 30°C, sous agitation avec une pâle. 0,2 parts en poids de benzotriazole (anticorrosif) et 0,2 parts en poids d'une solution aqueuse comprenant 2,5% en poids de 1,2-benzisothiazolin-3-one et 2,5% en poids de 2-méthyl-4-isothiazolin-3-one (biocide), sont ensuite ajoutés. Le mélange est agité jusqu'à solubilisation complète des additifs. 0,5 parts en poids de gomme de xanthane (modificateur de rhéologie) sont ajoutés lentement pendant 15 minutes. Après dispersion du modificateur de rhéologie, 28,6 parts en poids d'eau distillé sont ajoutés. La composition d'encre obtenue est maintenue sous agitation pendant 3 heures, puis 60 parts en poids d'une dispersion aqueuse de pigment thermochrome microencapsulé préparée ci-dessus (dispersion aqueuse à 30% en poids de pigment thermochrome microencapsulé) sont ajoutés. L'encre bleue est ensuite dispersée avec un disperseur à une vitesse d'au moins 15 $m.s^{-1}$ pendant 30 minutes. La composition d'encre est dégazée sous pression réduite avant injection dans des cartouches d'encre.

**EXEMPLE 2 :**

Préparation d'une composition de pigment thermochrome :

Une composition de pigment thermochrome est préparée en mélangeant 2,2 parts en poids de 3-(4-diéthylamino-2-éthoxyphényl)-3-(1-éthyl-2-méthylindol-3-yl)-4-azaphthalide (composé (A), n°CAS : 69898-40-4), 2,1 parts en poids de 2,2-bis(4-hydroxy-3-méthylphenyl)propane (composé (B1), n°CAS : 79-97-0), 2,1 parts en poids de 4,4'-(1,3-phenylenediisopropylidene)bisphénol (composé (B2), n°CAS : 13595-25-0), et 93,8 parts en poids d'un composé de formule (I) selon l'invention (composé (2)) (composé (C)) :

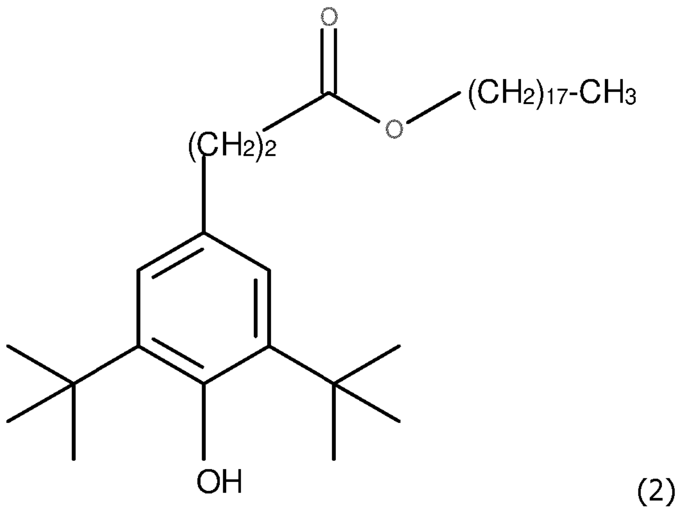

(2)

Le mélange obtenu est chauffé, sous agitation, à une température de 110°C pendant 1 heure, jusqu'à solubilisation complète des composés (A), (B1) et (B2) dans le composé (C).

Préparation d'un pigment thermochrome microencapsulé :

7,4 parts en poids d'une solution aqueuse d'un copolymère d'anhydride maléique et de méthylvinyléther (solution à 33% en poids de copolymère) sont neutralisés avec 10,2 parts en poids d'une solution aqueuse d'hydroxyde de sodium (solution à 1,0 M). Cette solution est diluée avec 40,3 parts en poids d'eau, et le mélange émulsionné avec un homogénéiseur à une vitesse d'au moins 15 $m.s^{-1}$. 25,3 parts en poids de la composition de pigment thermochrome précédemment préparée sont ajoutés, et l'émulsion obtenue est maintenue à une température de 80°C pendant 30 minutes. 16,8 parts en poids d'un pré-polymère mélamine-formaldéhyde (solution aqueuse à 50% en poids de pré-polymère) sont ensuite ajoutés au mélange au goutte-à-goutte. Le milieu réactionnel est alors chauffé à une température de 90°C et mélangé à une vitesse d'au moins 15 $m.s^{-1}$ pendant 4 heures.

Un slurry constitué de microcapsules de pigment thermochrome dispersées dans un solvant aqueux est obtenu, les microcapsules présentant un diamètre d90 de 3,9 μm, déterminé à l'aide d'un système Zetasizer Nano ZS de Malvern avec une illumination à 632 nm.

Les microcapsules de pigment thermochrome obtenues ont la propriété de changer de couleur du bleu à l'incolore au-dessus de 55°C avec un effet d'hystérésis de couleur.

Préparation d'une composition d'encre :

10,6 parts en poids de glycérine (co-solvant) sont chauffés à une température de 30°C, sous agitation avec une pâle. 0,2 parts en poids de benzotriazole (anticorrosif) et 0,2 parts en poids d'une une solution aqueuse comprenant 2,5% en poids de 1,2-benzisothiazolin-3-one et 2,5% en poids de 2-méthyl-4-isothiazolin-3-one (biocide), 0,5 parts en poids d'une dispersion aqueuse d'un copolymère polysiloxane (dispersion aqueuse à 50% en poids de polymère) (antimousse), et 0,5 parts en poids d'un polyéther polyol (tensioactif), sont ensuite ajoutés. Le mélange est agité jusqu'à solubilisation complète des additifs. 0,5 part en poids de gomme de xanthane (modificateur de rhéologie) sont ajoutés lentement pendant 15 minutes. Après dispersion du modificateur de rhéologie, 27,0 parts en poids d'eau distillé sont ajoutés. La composition d'encre obtenue est maintenue sous agitation pendant 3 heures, puis 60 parts en poids d'une dispersion aqueuse de pigment thermochrome microencapsulé préparée ci-dessus (dispersion aqueuse à 30% en poids de pigment thermochrome microencapsulé) sont ajoutés. Le pH de la composition d'encre est ajusté à pH = 8 avec 0,5 parts en poids de triéthanolamine. L'encre bleue est ensuite dispersée avec un disperseur à une vitesse d'au moins 15 $m.s^{-1}$ pendant 30 minutes. La composition d'encre est dégazée sous pression réduite avant injection dans des cartouches d'encre.

**Détermination des températures de décoloration et de recoloration des microcapsules de pigments thermochromes préparées aux Exemples 1 et 2** :

Les températures de transition des microcapsules de pigments thermochromes obtenues sont mesurées par calorimétrie différentielle à balayage (DSC) grâce à un appareil TA Instruments Q20, sur une plage de température

allant de -50 à 100°C, à des vitesses de refroidissement/chauffage de 20°C/minute. Les températures mesurées sont indiquées dans le Tableau 1 ci-après.

Tableau 1 : Températures de transition des microcapsules de pigment thermochrome selon l'Exemple 1

| | Changement de couleur coloré ↔ incolore | T1 (°C) | T2 (°C) | T3 (°C) | T4 (°C) | $T_H$ (°C) | $T_G$ (°C) | ΔH |
|---|---|---|---|---|---|---|---|---|
| Microcapsules de pigment thermochrome de l'Exemple 1 | bleue ↔ incolore | -10 | 4 | 50 | 62 | -3 | 56 | 59 |
| Microcapsules de pigment thermochrome de l'Exemple 2 | bleue ↔ incolore | -5 | 4 | 37 | 52 | 0 | 45 | 45 |

Les températures de transition mesurées sont les suivantes :

T1 : température de recoloration complète,
T2 : température de recoloration partielle,
T3 : température de décoloration partielle,
T4 : température de décoloration complète,

$$T_H = \frac{T1+T2}{2}$$

$$T_G = \frac{T3+T4}{2}$$

ΔH = plage d'hystérésis = $T_G - T_H$

**EXEMPLE 3** :

Plusieurs compositions de pigments thermochromes selon l'invention ont été testées pour déterminer les taux optimums de composés (A), (B) et (C) nécessaires à une décoloration complète des compositions.

Les compositions de pigments thermochromes sont préparées en mélangeant les composés (A), (B) et (C), sous agitation, à une température de 110°C pendant 1 heure, jusqu'à solubilisation complète des composés (A) et (B) dans le composé (C).

Les formules des différentes compositions 1-9 de pigments thermochromes testées apparaissent dans le Tableau 2 ci-dessous :

Tableau 2 : Formules des différentes compositions de pigments thermochromes testées

| | % en poids | | |
|---|---|---|---|
| Compositions | Composé (A) | Composé (B) | Composé (C) = Composé (1) |
| 1 | 2,4 | 5,1 | 92,5 |
| 2 | 4,1 | 4,1 | 91,9 |
| 3 | 2,8 | 5,5 | 91,7 |
| 4 | 7,6 | 2,0 | 90,4 |
| 5 | 1,9 | 8,2 | 89,9 |
| 6 | 4,5 | 8,6 | 86,9 |
| 7 | 16,5 | 5,3 | 78,3 |
| 8 | 24,0 | 6,3 | 69,8 |
| 9 | 0,7 | 1,5 | 97,9 |

L'effet thermochrome des différentes compositions de pigments thermochromes préparées est évalué visuellement en augmentant la température à 65°C. Les résultats observés sont récapitulés dans le Tableau 3 ci-après.

Tableau 3 : Effet thermochrome des différentes compositions 1-9 de pigments thermochromes testées

| Compositions | Observations visuelles |
|---|---|
| 1 | Totalement incolore au-dessus de 65°C |
| 2 | Totalement incolore au-dessus de 65°C |
| 3 | Totalement incolore au-dessus de 65°C |
| 4 | Totalement incolore au-dessus de 65°C |
| 5 | Légèrement bleu au-dessus de 65°C |
| 6 | Légèrement bleu au-dessus de 65°C |
| 7 | Légèrement bleu au-dessus de 65°C |
| 8 | Bleu au-dessus de 65°C |
| 9 | Totalement incolore au-dessus de 65°C |

On observe que plus le taux de composé (1) dans la composition de pigment thermochrome augmente, plus les compositions de pigments thermochromes s'effacent facilement et deviennent incolores.

CONTRE-EXEMPLE 1 :

Une composition de pigment thermochrome selon l'invention comprenant un composé de formule (I) selon l'invention (composé (1)) en tant que composé (C) :

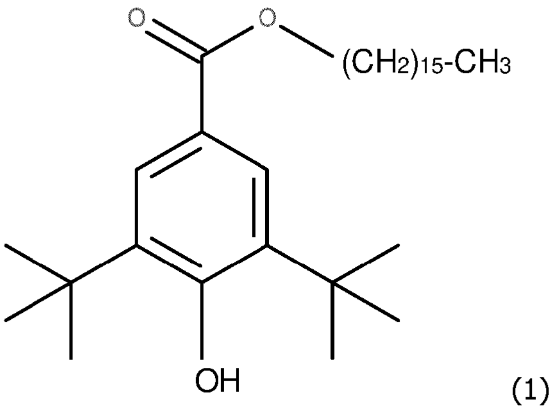

(1)

est comparée à une composition de pigment thermochrome dans laquelle le composé (1) est remplacé par du dodécyl parabène, un composé ayant une structure similaire, mais exempte de groupements terbutyles $-C(CH_3)_3$.

Les compositions de pigments thermochromes sont préparées en mélangeant les composés (A), (B) et (C), sous agitation, à une température de 110°C pendant 1 heure, jusqu'à solubilisation complète des composés (A) et (B) dans le composé (C).

Les formules des compositions de pigments thermochromes figurent dans le Tableau 4 ci-dessous.

Tableau 4 : Formules des compositions avec le composé (1) et avec le dodécyl parabène

| | Composition de l'invention (% en poids) | Composition comparative (% en poids) |
|---|---|---|
| Composé (A) : 3-(4-diéthylamino-2-éthoxyphényl)-3-(1-éthyl-2-méthylindol-3-yl)-4-azaphthalide (Blue 63, n° CAS : 69898-40-4) | 2,0 | 2,0 |
| Composé (B) : 4,4'-(hexafluoroisopropylidène)diphénol (Bisphénol AF, n° CAS : 1478-61-1) | 5,0 | 5,0 |
| Composé (C) : composé (1) | 93,0 | - |
| Composé (C): dodécyl parabène | - | 93,0 |

Pour tester l'effet thermochrome, une goutte de la composition de pigment thermochrome est déposée sur une lame de microscope. La plaque est ensuite chauffée à une température supérieure au point de fusion du composé (C). Une observation visuelle est réalisée en comparant l'intensité de la couleur lorsque la plaque est chauffée à une température supérieure au point de fusion du composé (C) avec une plaque placée à température ambiante.

A 20°C, les deux compositions comprenant le composé (1) et le dodécyl parabène sont toutes les deux colorées en bleu.

A 90°C, la composition de l'invention comprenant le composé (1) est complètement décolorée (incolore) alors que la composition comparative comprenant le dodécyl parabène reste colorée en bleu. Dans la composition comparative, le dodécyl parabène joue le rôle de développeur de couleur, du fait de l'absence d'encombrement stérique à proximité du 4-phénol.

**Revendications**

**1.** Composition de pigment thermochrome comprenant :

(A) au moins un composé organique colorant donneur d'électrons,
(B) au moins un composé accepteur d'électrons, et
(C) au moins un composé répondant à la formule (I) suivante :

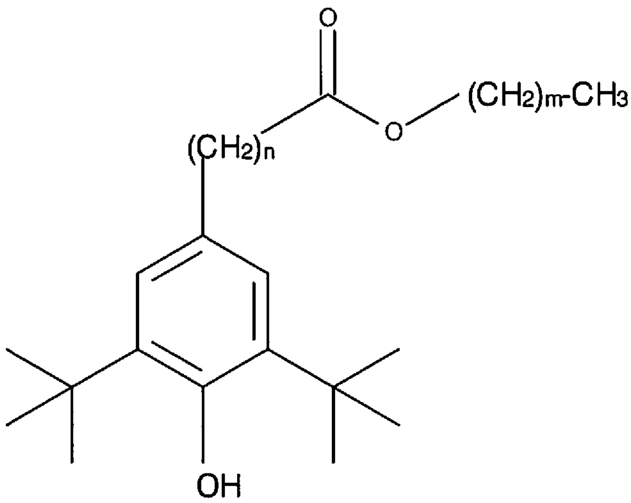

(I)

dans laquelle :

- n = 0-2, et
- m = 5-19.

**2.** Composition selon la revendication 1 dans laquelle le composé de formule (I) est choisi parmi un des composés suivants :

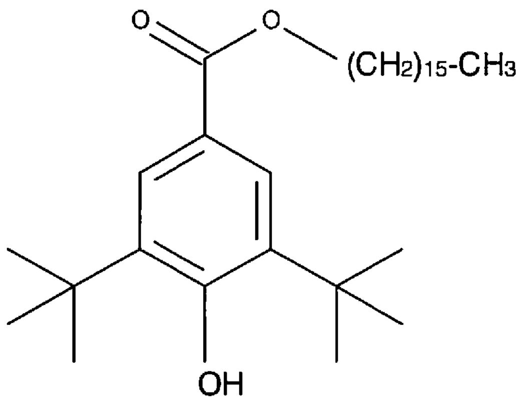

(1)

ou

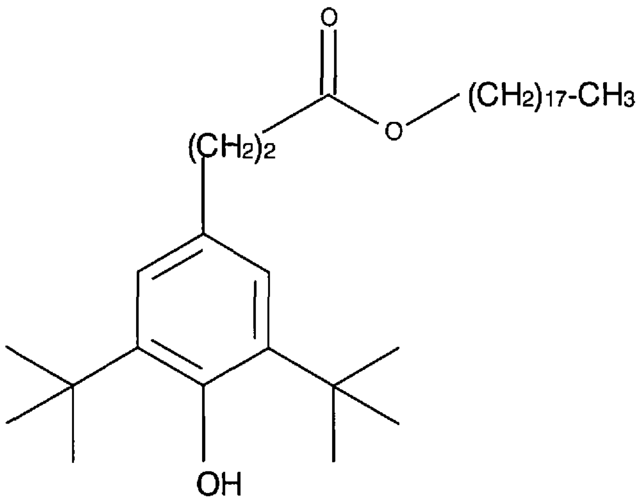

(2)

**3.** Composition selon la revendication 1 ou la revendication 2 comprenant :

(A) de 1 à 10% en poids d'au moins un composé organique colorant donneur d'électrons,
(B) de 1 à 20% en poids d'au moins un composé accepteur d'électrons, et
(C) de 70 à 98% en poids d'au moins un composé répondant à la formule (I).

**4.** Composition selon la revendication 3 comprenant :

(A) de 2 à 4% en poids d'au moins un composé organique colorant donneur d'électrons,
(B) de 4 à 10% en poids d'au moins un composé accepteur d'électrons, et
(C) de 86 à 94% en poids d'au moins un composé répondant à la formule (I).

**5.** Composition selon l'une des revendications 1 à 4 dans laquelle le composé (A) est choisi parmi le 3-(4-diéthylamino-2-éthoxyphényl)-3-(1-éthyl-2-méthylindol-3-yl)-4-azaphthalide (Blue 63, n° CAS : 69898-40-4), le 2'-(dibenzylamino)-6'-(diéthylamino)fluorane (n° CAS : 34372-72-0), le N,N-diméthyl-4-[2-[2-(octyloxy)phényl]-6-phényl-4-pyridinyl]benzènamine (Yellow CK37, n° CAS : 144190-25-0), le 7-(4-diéthylamino-2-hexyloxyphényl)-7-(1-éthyl-2-méthyl-1H-indol-3-yl)-7H-furo[3,4-b]pyridin-5-one (Blue 203, N° CAS : 98660-18-5), le 2-(2,4-diméthylphénylamino)-3-méthyl-6-diéthylaminofluoran (Black 15, N° CAS : 36431-22-8), et le 3,3-bis-(1-butyl-2-méthyl-indol-3-yl)-3H-isobenzofuran-1-one (Red 40, n° CAS : 50292-91-6).

**6.** Composition selon l'une des revendications 1 à 5 dans laquelle le composé (B) est choisi parmi le 2,2-bis(4-hydroxy-3-méthylphényl)propane (Bisphénol C, n° CAS : 79-97-0), le 4-hexyl-1,3-dihydroxybenzène (4-hexylrésorcinol, n° CAS : 136-77-6), le 4,4-cyclohexylidènebisphénol (BPZ, n° CAS : 843-55-0), le 4,4-(hexafluoroisopropylidène)diphénol (Bisphénol AF, n° CAS : 1478-61-1), le 4,4'-(1-phényléthylidène)bisphénol (n° CAS : 1571-75-1), le 2,2'-dihydroxybiphényl (n° CAS : 1806-29-7), le 4,4'-(1,4-phénylènediisopropylidène)bisphénol (n° CAS : 2167-51-3), le 1,1-bis(4-hydroxy-3-méthylphényl)cyclohexane (n° CAS : 2362-14-3), le 9,9-bis(4-hydroxyphényl)fluorène (n° CAS : 3236-71-3), le 4,4'-(1,3-phénylènediisopropylidène)bisphénol (n° CAS : 13595-25-0), le 1,1,1-tris(4-hydroxyphényl)éthane (n° CAS : 27955-94-8), le 4,4'-(2-éthylhexylidène)diphénol (n° CAS : 74462-02-5), le $\alpha,\alpha,\alpha'$-tris(4-hydroxyphényl)-1-éthyl-4-isopropylbenzène (n° CAS : 110726-28-8).

7. Utilisation d'un composé répondant à la formule (I) suivante :

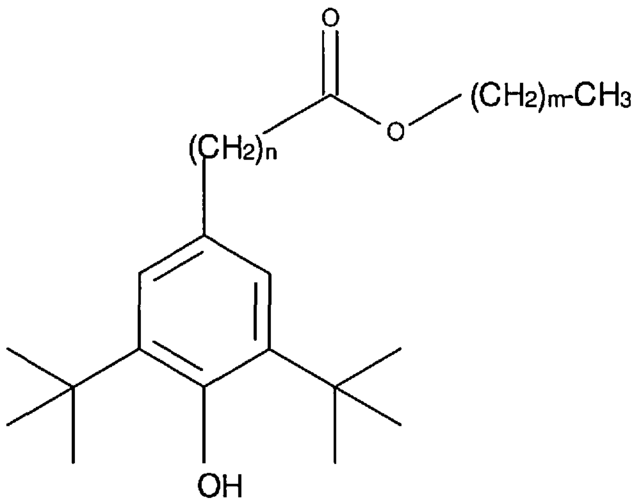

(I)

et dans laquelle :

- n = 0-2, et
- m = 5-19,

comme milieu réactionnel d'une composition de pigment thermochrome.

8. Pigment thermochrome microencapsulé comprenant une composition selon l'une des revendications 1 à 6.

9. Composition d'encre comprenant des pigments thermochromes microencapsulés selon la revendication 8.

10. Instrument d'écriture comprenant une composition d'encre selon la revendication 9.

11. Instrument d'écriture selon la revendication 10 choisi parmi les stylos, et plus particulièrement les stylos à encre effaçable par friction.

## Patentansprüche

1. Thermochrome Pigmentzusammensetzung, umfassend:

(A) mindestens eine organische Farbstoffverbindung, die ein Elektronendonor ist,
(B) mindestens eine Elektronenakzeptorverbindung und
(C) mindestens eine Verbindung, die der folgenden Formel (I) entspricht:

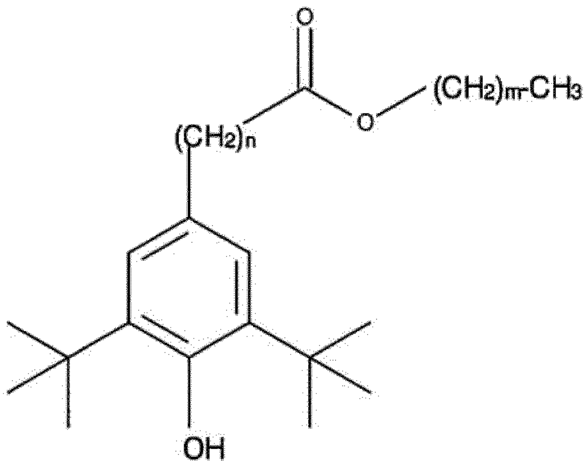

(I)

wobei:

- n = 0-2 und
- m = 5-19.

2. Zusammensetzung nach Anspruch 1, wobei die Verbindung der Formel (I) aus einer der folgenden Verbindungen ausgewählt ist:

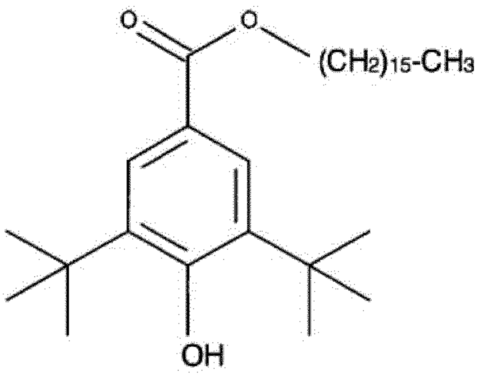

(1)

oder

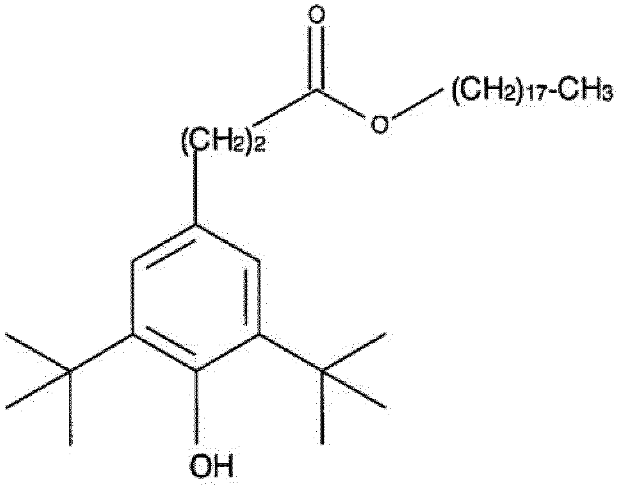

(2)

**3.** Zusammensetzung nach Anspruch 1 oder Anspruch 2, umfassend:

(A) 1 bis 10 Gew.-% mindestens einer organischen Farbstoffverbindung, die ein Elektronendonor ist,
(B) 1 bis 20 Gew.-% mindestens einer Elektronenakzeptorverbindung und
(C) 70 bis 98 Gew.-% mindestens einer Verbindung, die der Formel (I) entspricht.

**4.** Zusammensetzung nach Anspruch 3, umfassend:

(A) 2 bis 4 Gew.-% mindestens einer organischen Farbstoffverbindung, die ein Elektronendonor ist,
(B) 4 bis 10 Gew.-% mindestens einer Elektronenakzeptorverbindung und
(C) 86 bis 94 Gew.-% mindestens einer Verbindung, die der Formel (I) entspricht.

**5.** Zusammensetzung nach einem der Ansprüche 1 bis 4, wobei die Verbindung (A) ausgewählt ist aus 3-(4-Diethylamino-2-ethoxyphenyl)-3-(1-ethyl-2-methylindol-3-yl)-4-azaphthalid (Blau 63, CAS-Nr.: 69898-40-4), 2'-(Dibenzylamino)-6'-(diethylamino)fluoran (CAS-Nr.: 34372-72-0), N,N-Dimethyl-4-[2-[2-(octyloxy)phenyl]-6-phenyl-4-pyridinyl]benzolamin (Gelb CK37, CAS-Nr.: 144190-25-0), 7-(4-Diethylamino-2-hexyloxyphenyl)-7-(1-ethyl-2-methyl-1H-indol-3-yl)-7H-furo[3,4-b]pyridin-5-on (Blau 203, CAS-Nr.: 98660-18-5), 2-(2,4-Dimethylphenylamino)-3-methyl-6-diethylaminofluoran (Schwarz 15, CAS-Nr.: 36431-22-8) und 3,3-Bis-(1-butyl-2-methylindol-3-yl)-3H-isobenzofuran-1-on (Rot 40, CAS-Nr.: 50292-91-6).

**6.** Zusammensetzung nach einem der Ansprüche 1 bis 5, wobei die Verbindung (B) ausgewählt ist aus 2,2-Bis(4-hydroxy-3-methylphenyl)propan (Bisphenol C, CAS-Nr.: 79-97-0), 4-Hexyl-1,3-dihydroxybenzol (4-Hexylresorcin, CAS-Nr.: 136-77-6), 4,4'-Cyclohexylidenbisphenol (BPZ, CAS-Nr.: 843-55-0), 4,4'-(Hexafluorisopropyliden)diphenol (Bisphenol AF, CAS-Nr.: 1478-61-1), 4,4'-(1-Phenylethyliden)bisphenol (CAS-Nr.: 1571-75-1), 2,2'-Dihydroxybiphenyl (CAS-Nr.: 1806-29-7), 4,4'-(1,4-Phenylendiisopropyliden)bisphenol (CAS-Nr.: 2167-51-3), 1,1-Bis(4-hydroxy-3-methylphenyl)cyclohexan (CAS-Nr.: 2362-14-3), 9,9-Bis(4-hydroxyphenyl)fluoren (CAS-Nummer: 3236-71-3), 4,4'-(1,3-Phenylendiisopropyliden)bisphenol (CAS-Nr.: 13595-25-0), 1,1,1-Tris(4-hydroxyphenyl)ethan (CAS-Nr.: 27955-94-8), 4,4'-(2-Ethylhexyliden)diphenol (CAS-Nr.: 74462-02-5), $\alpha,\alpha,\alpha'$-Tris(4-hydroxyphenyl)-1-ethyl-4-isopropylbenzol (CAS-Nr.: 110726-28-8).

**7.** Verwendung einer Verbindung, die der folgenden Formel (I) entspricht:

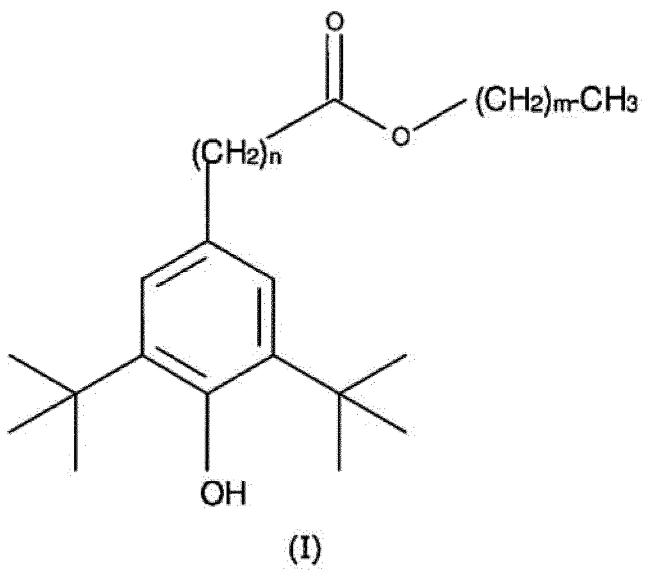

(I)

und wobei:

- n = 0-2 und
- m = 5-19,

als Reaktionsmedium einer thermochromen Pigmentzusammensetzung.

**8.** Mikroverkapseltes thermochromes Pigment, umfassend eine Zusammensetzung nach einem der Ansprüche 1 bis 6.

**9.** Tintenzusammensetzung, umfassend mikroverkapselte thermochrome Pigmente nach Anspruch 8.

**10.** Schreibgerät, umfassend eine Tintenzusammensetzung nach Anspruch 9.

**11.** Schreibgerät nach Anspruch 10, ausgewählt aus Stiften und insbesondere Stiften mit reibungslöschbarer Tinte.

**Claims**

**1.** Thermochromic pigment composition, comprising:

(A) at least one organic electron donor dye compound,
(B) at least one electron acceptor compound, and
(C) at least one compound corresponding to the following formula (I):

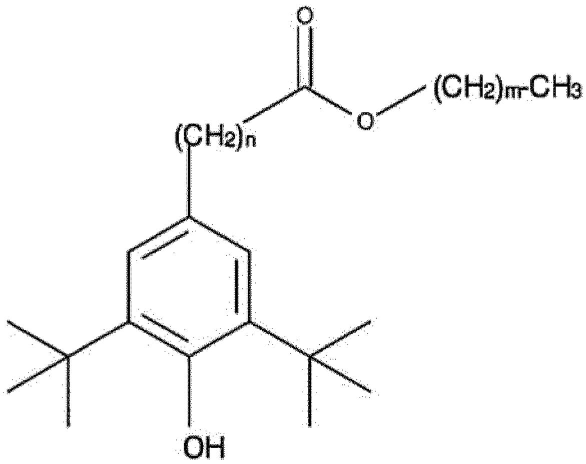

(I)

where:

- n = 0-2, and
- m = 5-19.

**2.** Composition according to claim 1, wherein the compound of formula (I) is selected from one of the following compounds:

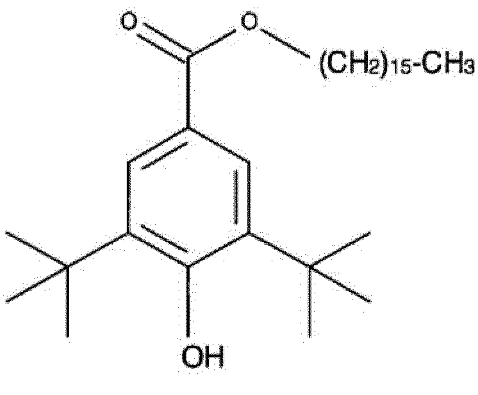

(1)

or

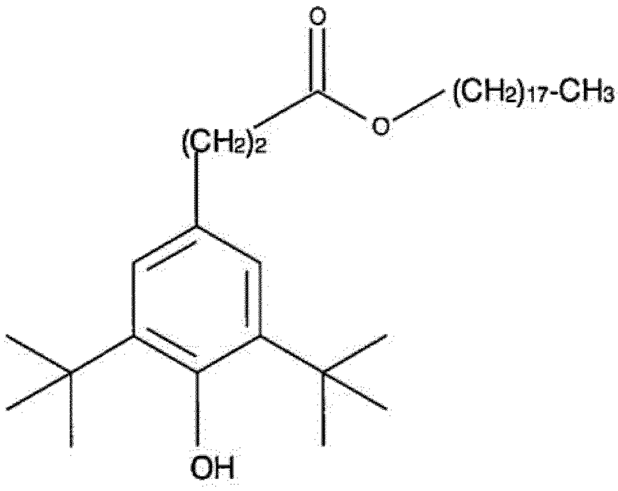

(2)

.

3. Composition according to either claim 1 or claim 2, comprising:

(A) from 1 to 10 wt.% of at least one organic electron donor dye compound,
(B) from 1 to 20 wt.% of at least one electron acceptor compound, and
(C) from 70 to 98 wt.% of at least one compound corresponding to formula (I).

4. Composition according to claim 3, comprising:

(A) from 2 to 4 wt.% of at least one organic electron donor dye compound,
(B) from 4 to 10 wt.% of at least one electron acceptor compound, and
(C) from 86 to 94 wt.% of at least one compound corresponding to formula (I).

5. Composition according to any of claims 1 to 4, wherein the compound (A) is selected from 3-(4-diethylamino-2-ethoxyphenyl)-3-(1-ethyl-2-methylindol-3-yl)-4-azaphthalide (Blue 63, CAS no.: 69898-40-4), 2'-(dibenzylamino)-6'-(diethylamino)fluoran (CAS no.: 34372-72-0), N,N-dimethyl-4-[2-[2-(octyloxy)phenyl]-6-phenyl-4-pyridinyl]benzenamine (Yellow CK37, CAS no.: 144190-25-0), 7-(4-diethylamino-2-hexyloxyphenyl)-7-(1-ethyl-2-methyl-1H-indol-3-yl)-7H-furo[3,4-b]pyridin-5-one (Blue 203, CAS no: 98660-18-5), 2-(2,4-dimethylphenylamino)-3-methyl-6-diethylaminofluoran (Black 15, CAS no.: 36431-22-8), and 3,3-bis-(1-butyl-2-methyl-indol-3-yl)-3H-isobenzofuran-1-one (Red 40, CAS no.: 50292-91-6).

6. Composition according to any of claims 1 to 5, wherein the compound (B) is selected from 2,2-bis(4-hydroxy-3-methylphenyl)propane (Bisphenol C, CAS no.: 79-97-0), 4-hexyl-1,3-dihydroxybenzene (4-Hexylresorcinol, CAS no.: 136-77-6), 4,4'-cyclohexylidenebisphenol (BPZ, CAS no.: 843-55-0), 4,4'-(hexafluoroisopropylidene)diphenol (Bisphenol AF, CAS no.: 1478-61-1), 4,4'-(1-phenylethylidene)bisphenol (CAS no.: 1571-75-1), 2,2'-dihydroxybiphenyl (CAS no.: 1806-29-7), 4,4'-(1,4-phenylenediisopropylidene)bisphenol (CAS no: 2167-51-3), 1,1-bis(4-hydroxy-3-methylphenyl)cyclohexane (CAS no.: 2362-14-3), 9,9-bis(4-hydroxyphenyl)fluorene (CAS no.: 3236-71-3), 4,4'-(1,3-phenylenediisopropylidene)bisphenol (CAS no.: 13595-25-0), 1,1,1-tris(4-hydroxyphenyl)ethane (CAS no.: 27955-94-8), 4,4'-(2-ethylhexylidene)diphenol (CAS no.: 74462-02-5), $\alpha,\alpha,\alpha'$-tris(4-hydroxyphenyl)-1-ethyl-4-isopropylbenzene (CAS no.: 110726-28-8).

7. Use of a compound corresponding to the following formula (I):

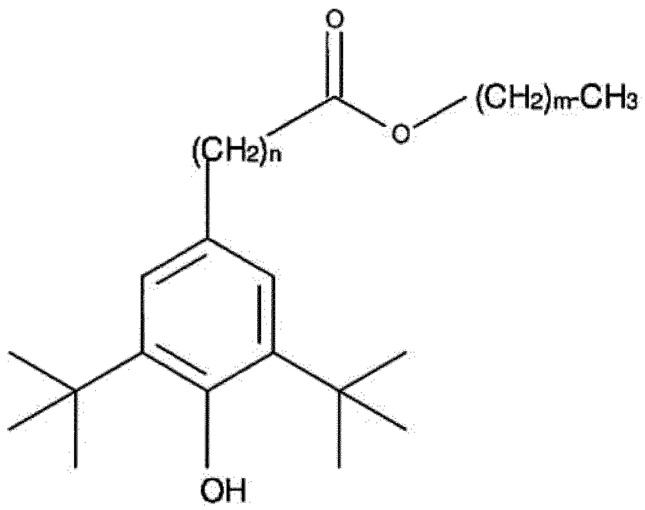

(I)

where:

- n = 0-2, and
- m=5-19,

as a reaction medium for a thermochromic pigment composition.

**8.** Microencapsulated thermochromic pigment, comprising a composition according to any of claims 1 to 6.

**9.** Ink composition comprising microencapsulated thermochromic pigments according to claim 8.

**10.** Writing instrument comprising an ink composition according to claim 9.

**11.** Writing instrument according to claim 10, selected from pens, more particularly friction-erasable ink pens.

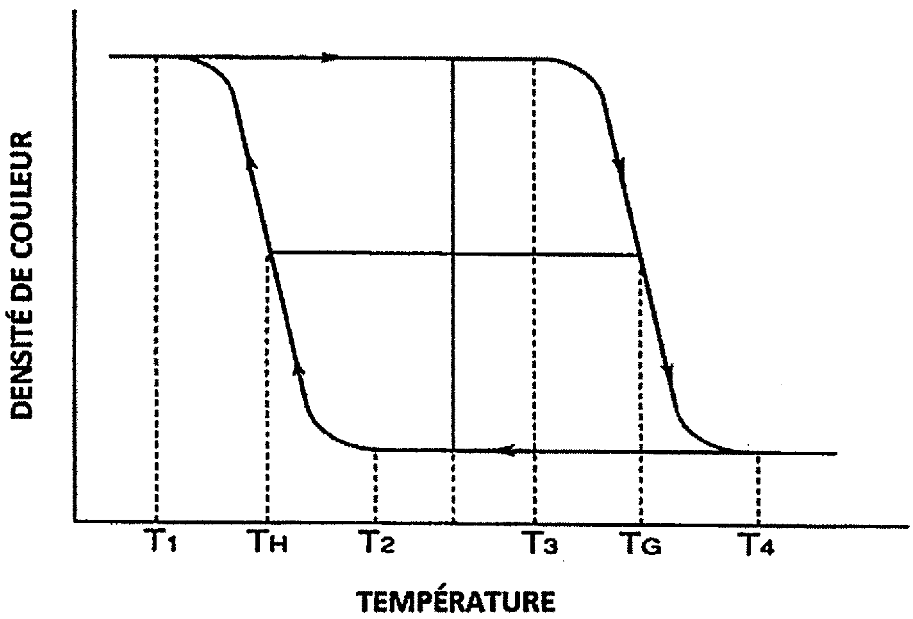


FIGURE 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 3009493 A1
- WO 2016198784 A1
- WO 2013115800 A1


### Littérature non-brevet citée dans la description


- *CHEMICAL ABSTRACTS,* 69898-40-4
- *CHEMICAL ABSTRACTS,* 1552-42-7
- *CHEMICAL ABSTRACTS,* 21121-62-0
- *CHEMICAL ABSTRACTS,* 21934-68-9
- *CHEMICAL ABSTRACTS,* 26567-23-7
- *CHEMICAL ABSTRACTS,* 26628-47-7
- *CHEMICAL ABSTRACTS,* 29199-09-5
- *CHEMICAL ABSTRACTS,* 29512-49-0
- *CHEMICAL ABSTRACTS,* 34372-72-0
- *CHEMICAL ABSTRACTS,* 36431-22-8
- *CHEMICAL ABSTRACTS,* 36499-49-7
- *CHEMICAL ABSTRACTS,* 36886-76-7
- *CHEMICAL ABSTRACTS,* 50292-91-6
- *CHEMICAL ABSTRACTS,* 50292-95-0
- *CHEMICAL ABSTRACTS,* 59129-79-2
- *CHEMICAL ABSTRACTS,* 69898-40-0
- *CHEMICAL ABSTRACTS,* 70516-41-5
- *CHEMICAL ABSTRACTS,* 75805-17-3
- *CHEMICAL ABSTRACTS,* 82137-81-3
- *CHEMICAL ABSTRACTS,* 89331-94-2
- *CHEMICAL ABSTRACTS,* 92453-31-1
- *CHEMICAL ABSTRACTS,* 98660-18-5
- *CHEMICAL ABSTRACTS,* 132467-74-4
- *CHEMICAL ABSTRACTS,* 144190-25-0
- *CHEMICAL ABSTRACTS,* 148716-90-9
- *CHEMICAL ABSTRACTS,* 79-97-0
- *CHEMICAL ABSTRACTS,* 136-77-6
- *CHEMICAL ABSTRACTS,* 843-55-0
- *CHEMICAL ABSTRACTS,* 1478-61-1
- *CHEMICAL ABSTRACTS,* 1571-75-1
- *CHEMICAL ABSTRACTS,* 1806-29-7
- *CHEMICAL ABSTRACTS,* 2081-08-5
- *CHEMICAL ABSTRACTS,* 2167-51-3
- *CHEMICAL ABSTRACTS,* 2362-14-3
- *CHEMICAL ABSTRACTS,* 3236-71-3
- *CHEMICAL ABSTRACTS,* 13595-25-0
- *CHEMICAL ABSTRACTS,* 27955-94-8
- *CHEMICAL ABSTRACTS,* 74462-02-5
- *CHEMICAL ABSTRACTS,* 110726-28-8
- *CHEMICAL ABSTRACTS,* 140-66-9
- *CHEMICAL ABSTRACTS,* 831-82-3
- *CHEMICAL ABSTRACTS,* 1096-84-0
- *CHEMICAL ABSTRACTS,* 14763-60-1
- *CHEMICAL ABSTRACTS,* 95235-30-6
- *CHEMICAL ABSTRACTS,* 92-88-6
- *CHEMICAL ABSTRACTS,* 92-69-3
- *CHEMICAL ABSTRACTS,* 99-89-8
- *CHEMICAL ABSTRACTS,* 131-56-6
- *CHEMICAL ABSTRACTS,* 150-76-5
- *CHEMICAL ABSTRACTS,* 501-24-6
- *CHEMICAL ABSTRACTS,* 599-64-4
- *CHEMICAL ABSTRACTS,* 3380-34-5
- *CHEMICAL ABSTRACTS,* 232938-43-1
- *CHEMICAL ABSTRACTS,* 79-94-7
- *CHEMICAL ABSTRACTS,* 80-05-7